Europäisches Patentamt

European Patent Office

Office européen des brevets

(11) Publication number: **0 340 564**
**A2**

## EUROPEAN PATENT APPLICATION

(21) Application number: 89107222.5

(22) Date of filing: 21.04.89

(51) Int. Cl.⁴: **C09D 5/00 , C09D 7/12 , C09D 3/80 , C08J 7/04**

(30) Priority: 04.05.88 US 190294

(43) Date of publication of application:
08.11.89 Bulletin 89/45

(34) Designated Contracting States:
DE FR GB IT NL

(71) Applicant: GENERAL ELECTRIC COMPANY
1 River Road
Schenectady New York 12305(US)

(72) Inventor: Goossens, John Charles
1612 Magnolia Court
Mt. Vernon Indiana 47620(US)

(74) Representative: Catherine, Alain
General Electric France Service de Propriété
Industrielle 18 Rue Horace Vernet B.P. 76
F-92134 Issy-les-Moulineaux Cédex(FR)

(54) Haze resistant, UV stabilized acrylic primer composition.

(57) A primer composition is provided for forming a primer layer for a thermoplastic substrate for increasing the adhesion of protective hardcoats thereto. The composition dries rapidly under conditions of either high or low humidity to form a clear haze-free primer layer.

EP 0 340 564 A2

# HAZE RESISTANT, UV STABILIZED ACRYLIC PRIMER COMPOSITION

## BACKGROUND OF THE INVENTION

The use of transparent material utilizing thermoplastic resin as a structural component is well known. Products made from such thermoplastic resins, particularly polycarbonate resin, exhibit such properties as toughness, high transparency, good dimensional stability, excellent creep resistance, excellent thermal stability and the like. While thermoplastic resins, for example polycarbonate resin, are easily fabricated into desired shapes and have excellent physical and chemical properties, their scratch and abrasion resistance is relatively low.

In order to overcome low scratch and abrasion resistance, various known coatings have been recommended for use on non-opaque plastics. Such coatings believed to exhibit the best degree of abrasion resistance are comprised of at least one silicon - containing compound, U.S. Pat. Nos. 3,451,838; 3,986,997; and 4,027,073 disclose organopolysiloxane coatings, compositions and techniques for the application of such to polycarbonate substrate.

The principal problem associated with the organopolysiloxane hardcoats is that of adhesion to the thermoplastic substrate. Acrylic primers, both thermoset and thermoplastic, have been commonly used with good results as a primer layer to improve adhesion between hardcoats and substrates. Thermosets have generally been preferred over thermoplastics as a primer layer for hardcoats due to availability as aqueous dispersions which permit higher production rates, as opposed to the use of slow drying solvent based thermoplastic primers. Attempts have been made to develop fast drying thermoplastic primer layers by employing highly volatile solvents therein. Such attempts have generally failed however due to a cooling of the primer layer during evaporation of the solvent causing condensation of moisture from the atmosphere under high relative humidity conditions onto the surface of the primer layer thereby creating a generally hazed primer layer which greatly diminishes the aesthetic and functional value thereof. Hazing has been further compounded by many of the highly volatile solvents being incompatible with the polycarbonate substrate. Also, too rapid evaporation leads to streaking of the primer; i.e., development of fine vertical striations in the primer layer which adversely affects the aesthetic and optical qualities of the primer layer.

The slow drying thermoplastic primers have, however, found extensive use in the adhesion of hardcoats to polycarbonate substrates, since the use of thermosets as primers typically results in stress cracking of the hardcoat surface during subsequent lamination processes. These thermoplastic primer compositions have, however, typically employed the use of toxic solvents such as 2-ethoxyethanol (EE), as taught in U.S. Patent No. 4,395,463, which is known to have reproductive toxicity in lab test animals.

As a result of the foregoing, production procedures of structured products involving both the production of hardcoated monolithic sheets and hardcoated laminates require the use of separate primer compositions, a thermoset primer layer for the monolithic hardcoated sheets and a thermoplastic primer layer for the hardcoated sheets to be used in laminate production, resulting in additional expense and inconvenience in the production of these hardcoated sheets. Thus, it is desirable to provide a fast, low-temperature drying primer composition that can be used equally well as a primer for hardcoats for monolithic sheets and for hardcoated laminae.

It is, therefore, an objective of the present invention to provide a fast, low-temperature drying thermoplastic primer composition which can be used equally well as a primer layer for hardcoats of monolithic sheets and as a primer layer for hardcoats of sheets to be used in subsequent lamination.

It is another objective to provide a fast, low-temperature drying thermoplastic acrylic primer which is compatible with polycarbonate substrates.

It is still another objective to provide a thermoplastic primer composition which does not contain solvents of relatively high toxicity.

It is yet another objective to provide a thermoplastic acrylic primer which dries rapidly and forms a clear, haze-free primer layer under drying conditions of either high or low humidity.

## SUMMARY OF THE INVENTION

This invention relates to compositions for primer layers used to adhere protective hardcoats to thermoplastic substrates. More particularly, this invention relates to acrylic primer compositions containing a

2

moderately fast-drying solvent which dries under conditions of either high or low humidity to form a clear haze-free primer layer on an aromatic polycarbonate substrate.

## DESCRIPTION OF THE INVENTION

Briefly, according to the present invention, there is provided an improved polycarbonate compatible thermoplastic acrylic primer composition for forming a fast, low-temperature drying, haze-free primer layer for the adhering of organosiloxane hardcoats to thermoplastic substrates. The primer composition broadly comprises:

    i) a thermoplastic acrylic polymer; and

    ii) a solvent comprised of monopropyl ether of ethylene glycol.

Although other substrates may find utility in the present invention, the preferred thermoplastic substrate or layer for use herein is a polycarbonate sheet or film. Suitable polycarbonates may be prepared by reacting a dihydric phenol with a carbonate precursor, such as phosgene, a haloformate or a carbonate ester. Typically, these polycarbonates will have recurring structural units of the formula:

$$(O-A-O-\overset{\overset{\displaystyle O}{\|}}{C})$$

wherein A is a divalent aromatic radical of the dihydric phenol employed in the polymer producing reaction. Preferably, the aromatic carbonate polymers have an intrinsic viscosity ranging from 0.30 to 1.0 dl./g. (measured in methylene chloride at 25°C). By dihydric phenols is meant mononuclear or polynuclear aromatic compounds containing two hydroxy radicals, each of which is attached to a carbon atom of an aromatic nucleus. Typical dihydric phenols include 2,2-bis-(4-hydroxyphenyl)propane; 2,2-bis-(3,5-dimethyl-4-hydroxyphenyl)propane, 4,4'-dihydroxy-diphenyl ether, bis(2-hydroxyphenyl)methane, mixtures thereof and the like. The preferred aromatic carbonate polymer for use herein is a homopolymer derived from 2,2-bis(4-hydroxyphenyl)propane, i.e. bisphenol-A.

Also preferred for the use as the substrate or layer herein is copolyester-carbonate sheet. The term polycarbonate as used herein includes copolyester-carbonates. The preferred copolyester-carbonate constituting the substrate or layer contains recurring carbonate groups:

$$-O-\overset{\overset{\displaystyle O}{\|}}{C}-O-$$

and carboxylate groups:

$$-\overset{\overset{\displaystyle O}{\|}}{C}-O-$$

separated by the "A" divalent aromatic radicals in the polymer chain. These groups may occur either randomly or as blocks, with the number of ester bonds relative to the number of carbonate bonds generally being in the range of from about 1/2 to about 6/1. The preferred copolyester-carbonates include the aromatic copolyester-carbonates derived from bisphenol A; phosgene; and isophthalic acid, terephthalic acid, or reactive derivatives of these acids such as terephthaloyl dichloride, isophthaloyl dichloride, or mixtures thereof. Preferably, both isophthalic acid and terephthalic acid are employed in the copolyester-carbonate monomer mix. Additional examples of copolyester-carbonates and methods of their manufacture are disclosed in U.S. Pat. Nos. 3,030,331; 3,169,121; 3,207,814; 4,156,069; 4,188,314; 4,194,038 and 4,615,947 which are incorporated herein by reference.

Various substances are suitable for the hardcoat of the present invention. The preferred hardcoats are the organopolysiloxane described in U.S. Pat. Nos. 3,888,815; 3,701,753; 3,986,997; 4,284,685; 4,308,317 and 4,615,947. Broadly, these organopolysiloxanes may be described as the solid condensation products of partial condensation of silanols derived from compounds having the general formula:

$$R^3_b \, Si \, Z_{(4-b)}$$

wherein each $R^3$ is independently a monovalent hydrocarbon radical or a halogenated monovalent hydrocarbon radical, Z represents a hydrolyzable group, and "b" may, on average, vary from 0 to 2. More specifically, each Z is independently a member of one or more of the following hydrolyzable groups: halogen, alkoxy, aryloxy, and acyloxy.

Preferably, $R^3$ represents an alkyl radical containing from 1 to about 6 carbon atoms such as methyl, ethyl and propyl through hexyl (both normal and isomeric); an alkenyl radical containing from 2 to about 6 carbon atoms, such as vinyl and propenyl; a phenyl radical; a halogenated alkyl radical containing from 1 to about 6 carbon atoms such as the 3,3,3-trifluoropropyl radical; a glycidoxyalkylene radical containing from

2 to about 6 carbon atoms such as the gamma-glycidoxypropyl radical; or an acrylic ester radical such as the gamma methacryloxypropyl radical containing from about 4 to about 8 carbon atoms. Preferably Z represents an alkoxy radical containing from 1 to about 6 carbon atoms such as methoxy, ethoxy, propoxy, hexoxy and the like; a phenoxy radical; an acyloxy radical containing from 2 to about 6 carbon atoms such as acetoxy, propanoyloxy, butyroyloxy; pentanoyloxy, hexanoyloxy, and the like; or a benzoyloxy radical. Suitable hardcoats prepared or derived from silanes and containing partial condensates of silanols are disclosed in U.S. Pat. No. 4,615,947 which is incorporated herein by reference.

The primer composition of the present invention broadly includes in admixture a thermoplastic acrylic polymer and a solvent containing an amount of a propyl ether of ethylene glycol. Preferably the primer composition contains from 1 to 5 percent by weight of the acrylic polymers, 0.2 to 2.0 percent by weight of a UV stabilizing or absorbing compound, and from 93.0 to 98.8 percent by weight of a solvent containing monopropyl ether of ethylene glycol. The preferred solvent contains amounts of diacetone alcohol, propylene glycol monomethyl ether, and monopropyl ether of ethylene glycol. In more detail, the composition preferably contains from about 1 to 5 percent by weight of the acrylic polymer, from about 0.2 to 2.0 percent by weight of a UV stabilizing or absorbing compound, from about 10 to 25 percent by weight of diacetone alcohol, from about 30 to 50 percent by weight of propylene glycol monomethyl ether and from about 30 to 50 percent by weight of monopropyl ether of ethylene glycol.

More preferably, the primer composition of the present invention includes from about 1.5 to 3.0 percent by weight of the acrylic polymer and most preferably about 2 percent by weight thereof; from about 0.4 to 1.5 percent by weight of the UV stabilizing or absorbing compound and most preferably about 0.8 percent by weight thereof; from about 12 to 20 percent by weight of diacetone alcohol (DAA) and most preferably about 15 percent by weight thereof; from about 35 to 45 percent by weight of propylene glycol monomethyl ether (PM) and most preferably about 41 percent by weight thereof; and from about 35 to 45 percent by weight of monopropyl ether of ethylene glycol (EP) and most preferably about 41 percent by weight thereof.

The preferred acrylic resin is polymethylmethacrylate (PMMA) which is a thermoplastic polymer of methyl methacrylate. The preferred polymethylmethacrylate has an average molecular weight of 350,000, has an inherent viscosity of 1.3, and is used in powdered form prior to dissolution in the solvent of the composition. Other suitable acrylic resins include various thermoplastic polymers or copolymers of acrylic acid, methacrylic acid, or esters of these acids, as well as other suitable acrylic resins. Polymethylmethacrylate may be purchased under the trademark Elvacite® from DuPont Company, Wilmington, Delaware, and is commercially available.

An optional ultraviolet light absorbing or stabilizing compound may be added to the primer. The ultraviolet light absorbing or stabilizing system can be one which contains only one ultraviolet light absorbing or stabilizing compound or it can contain a mixture of two or more ultraviolet light absorbing or stabilizing compounds. Suitable ultraviolet light absorbing or stabilizing compounds are well known in the art and are readily available. Illustrative of suitable absorbing compounds are the hydroxy benzophenones, the benzotriazoles, the cyanoacrylates, or the benzylidene malonates. A suitable cyanoacrylate is 2-ethylhexyl-2-cyano-3,3-diphenylacrylate. Additionally, suitable ultraviolet light stabilizing compounds are the hindred amines and nickel thiocarbamates. More specific examples of ultraviolet light absorbers may be found in U.S. Pat. No. 3,043,079 which is incorporated herein by reference. The preferred UV stabilizing compound comprises 2-(2′-hydroxy-5′-t-octylphenyl) benzotriazole and nickel dibutyldithiocarbamate. Preferably, the 2-(2′-hydroxy-5′-t-octylphenyl) benzotriazole is present at a level of from about 0.5 to about 2.0 percent by weight of the primer composition, and more preferably at a level of 0.8 percent by weight thereof. Preferably, the dibutyldithiocarbamate is present at a level of from about 0.05 to 0.2 percent by weight of the primer composition and more preferably at a level of about 0.08 percent thereof.

The preferred solvent of the present invention includes respective amounts of diacetone alcohol, propylene glycol monomethyl ether and monopropyl ether of ethylene glycol. Diacetone alcohol (4-hydroxy-4 methyl-2-pentanone) exhibits good solvency for polymethylmethacrylate. Diacetone alcohol is a colorless liquid, has a molecular weight of 116.2, a vapor pressure at 20°C of 1.1 mm Hg, a boiling point at 1 atm of 169°C, is miscible with alcohols, aromatic and halogenated hydrocarbons, esters and water and is commercially available.

Propylene glycol monomethyl ether exhibits relatively low toxicity, improved wetting of the substrate, a high evaporation rate, relatively high solvency of the acrylic primer resin and relatively low sensitivity to water thus maintaining the acrylic in solution even in the presence of appreciable concentrations of water. The high evaporation rate of propylene glycol monomethyl ether facilitates rapid drying of the primer layer. Propylene glycol monomethyl ether is a colorless liquid, has a boiling point of 120.1°C, a density of 0.9234, a refractive index of 1.402 (25C), is soluble in water, methanol and ether, is sold under the trademark ARCOSOLV® PM by ARCO Chemical Company of Philadelphia, Pennsylvania, and is commercially

4

available.

Monopropyl ether of ethylene glycol prevents streaking and hazing during drying of the primer composition and exhibits relatively poor solvency for the acrylic of the primer composition. Monopropyl ether of ethylene glycol (2-propoxy ethanol) has a molecular weight of 104.15 and is sold under the trademark Ektasolve® EP Solvent by Eastman Chemical Products, Inc. of Kingsport, Tennessee, and is commercially available.

The primer composition of the present invention is formed by dissolving the acrylic resin and the UV stabilizing or absorbing compound in the solvent with good agitation and heat applied thereto.

The primer layer is applied to the thermoplastic substrate by applying a thin layer of the primer composition onto the substrate by any of the well known methods such as spraying, dipping, roll-coating and the like. The solvent is then evaporated off, as by air drying or mild heating, to leave an even and uniform layer of solids. The thickness of the primer layer thus applied is typically substantially uniform and is about 0.002-1.0 mil, most often about 0.01-0.1 and preferably about 0.02-0.08 mil. The propyl ether of ethylene glycol resists haze formation in the primer layer during drying of the primer under either conditions of high or low humidity. It is believed that haze formation is caused by the condensation of atmospheric moisture onto the primer layer during drying thereof and that the inclusion of monopropyl ether of ethylene glycol into the solvent resists the formation of haze in the primer layer during drying of the primer composition under conditions of either high or low humidity. The solvent system of the present invention is compatible with polycarbonate thermoplastics.

The primer compositions of the instant invention may also optionally contain various flatting agents, surface active agents, stabilizers such as antioxidants, and thixotropic agents. All of these additives and the use thereof are well known in the art and do not require extensive discussion. It is understood that any compounds possessing the ability to function in such a manner, i.e., as flatting agent, surface active agent, and stabilizer, can be used provided they do not adversely affect adhesion.

The hardcoats, preferably organopolysiloxanes, can be applied to the dried primer layer by brushing, dipping, spraying or flowing the hardcoat solution thereon. The thickness of the hardcoat may be controlled with the preferred hardcoat thickness being from about 0.1 to about 0.4 mil. After application of the hardcoat solution to the primer layer, the solution is thermally cured to form a solid hardcoat thereon.

Thus, in the manner of the present invention, primer compositions are provided for the making of primer layers for the adhesion of coatings to polycarbonate thermoplastic substrates. The primer compositions of the present invention are polycarbonate compatible and dry rapidly without the formation of haze in the primer layer and do not have the level of toxicity associated with 2-ethoxyethanol solvents. In order that those skilled in the art may better understand and more easily practice the present invention, the following examples are given by way of illustration and not by way of limitation.


EXAMPLE #1


Various primer blends were prepared having 3% Elvacite® 2041 acrylic resin (polymethylmethacrylate) and 0.5% Uvinul N-539 stabilizer (2-ethylhexyl-2-cyano-3,3-diphenylacrylate) dissolved in different two-part solvent systems. The solvent systems comprising the remaining 96.5% of the blends. These primer blends were flow coated on 6″ X 8″ X 1/4″ polycarbonate panels suspended in a coating cabinet at 77° F. The time required for complete drying of the primer coat was observed and recorded as follows:

| Solvent Composition of the Primer Blends | | Minutes to Dry |
|---|---|---|
| 1 | 80 parts EE/20 parts DAA | 27 |
| 2 | 80 parts PM/20 parts DAA | 11 |
| 3 | 65 parts PM/35 parts DAA | 16 |
| 4 | 55 parts PM/45 parts DAA | 20 |
| 5 | 45 parts PM/55 parts DAA | 25 |

Note that the dry time of the primer blend containing the solvent system of 45 parts PM/55 parts DAA dried at least as fast as the solvent system of 80 parts EE/20 parts DAA containing the relatively toxic EE.

## EXAMPLE #2

The primer compositions of example #1 were used on large polycarbonate sheets (4′ X 6′ X 1/4″) and dried at 150° F for 20 minutes. The primed sheets were inspected for optical defects in the primer coat and their appearance recorded.

| Solvent Composition | Primer Coat Appearance |
|---|---|
| 1 | Clear and Smooth |
| 2 | Heavy Vertical Streaking |
| 3 | Moderate Vertical Streaking |
| 4 | Very Light Vertical Streaking |
| 5 | Clear and Smooth |

Note that the solvent system of 45 parts PM/55 parts DAA provided a clear and smooth primer layer whereas the faster drying composition resulted in appearances of streaks in the primer layers.

## EXAMPLE #3

Various primer blends were prepared having 2.5% Elvacite® 2041 acrylic solids and 0.7% Uvinul N-539 stabilizer dissolved in different three-part solvent systems. The solvent systems comprised the remaining 96.8% of the primer blends. These primer blends were flow coated on 6″ X 8″ X 1/4″ polycarbonate panels suspended in a coating cabinet at 73° F. The time required for complete drying of the primer coat was observed and recorded as follows:

| Solvent Composition | | Minutes to Dry |
|---|---|---|
| A | 45 parts PM 0 parts EP 55 parts DAA | 26 |
| B | 55 parts PM 0 parts EP 45 parts DAA | 22 |
| C | 55 parts PM 20 parts EP 25 parts DAA | 19 |
| D | 45 parts PM 45 parts EP 10 parts DAA | 22 |
| E | 40 parts PM 50 parts EP 10 parts DAA | 23 |
| F | 40 parts PM 45 parts EP 15 parts DAA | 25 |

## EXAMPLE #4

The primer compositions of example #3 were used on large polycarbonate sheets (6′ X 8′ X 1/4″) under conditions of high (approx. 60%) relative humidity. They were dried at 130° F for 20 minutes and inspected for optical defects in the primer coat.

| Solvent Composition | Primer Coat Appearance |
|---|---|
| A | Heavy surface haze |
| B | Moderate Haze Plus Light Streaks |
| C | Light Haze and Streaks |
| D | Clear with Small Gels |
| E | Very Light Haze and Heavy Gels |
| F | Clear and Smooth |

Note that the primer blends having the solvent systems of C-F which contained amounts of EP exhibited much lower levels of haze formation than did the solvent systems of A and B which did not contain EP therein.

The haze in primer blend E was not the typical moisture induced haze. It resulted, along with the gels, from the high EP content because EP is a very poor solvent for Elvacite® 2041 and is probably the last component of this solvent system to evaporate.

## Claims

1. A primer composition for polycarbonate substrates, said composition comprising in admixture a thermoplastic acrylic polymer and a solvent system, said solvent system comprising;
   (a) propylene glycol monomethyl ether;
   (b) diacetone alcohol; and
   (c) monopropyl ether of ethylene glycol.

2. The primer composition of claim 1 wherein said acrylic polymer is comprised of a polymethylmethacrylate.

3. The primer composition of claim 1 wherein said substrate is an aromatic carbonate polymer substrate.

4. The primer composition of claim 1 wherein said primer composition further comprises a UV light absorbing or stabilizing compound.

5. The primer composition of claim 1 wherein said monopropyl ether of ethylene glycol is present at a level of from about 30 to 50 percent by weight of said primer composition.

6. The primer composition of claim 5 wherein said propylene glycol monomethyl ether is present at a level of from about 30 to 50 percent by weight of said primer composition.

7. The primer composition of claim 6 wherein said diacetone alcohol being present at a level of from about 10 to 25 percent by weight of said primer composition.

8. The primer composition of claim 7, wherein said primer composition further comprises a UV absorbing or stabilizing compound, said compound being present at a level of from about 0.2 to 2.0 percent by weight of said primer composition.

9. The primer composition of claim 8, wherein said acrylic polymer is comprised of a polymethylmethacrylate.

10. The primer composition of claim 1, wherein said polycarbonate substrate is a copolyester-carbonate thermoplastic substrate.

11. A primer composition for polycarbonate substrates, said composition comprising in admixture:
   (a) from about 1 to 5 percent by weight of a thermoplastic acrylic polymer;
   (b) from about 0.2 to 2.0 percent by weight of a UV light absorbing or stabilizing compound;
   (c) from about 10 to 25 percent by weight of diacetone alcohol;
   (d) from about 30 to 50 percent by weight of propylene glycol monomethyl ether; and
   (e) from about 30 to 50 percent by weight of monopropyl ether of ethylene glycol.

12. The primer composition of claim 11 wherein said propyl ether bf ethylene glycol is present at a level of about 41 percent by weight.

13. The primer composition of claim 11, wherein said propylene glycol monomethyl ether is present at a level of about 41 percent by weight.

14. The primer composition of claim 11, wherein said diacetone alcohol is present at a level of about 15 percent by weight.

15. An article comprising a polycarbonate substrate having adhered on at least one surface a haze-free primer layer, said primer layer being a dried residue of a primer composition consisting essentially of:

(a) from about 1 to 5 percent by weight of a thermoplastic acrylic polymer;

(b) from about 0.2 to 2.0 percent by weight of a UV light absorbing or stabilizing compound;

(c) from about 10 to 25 percent by weight of diacetone alcohol;

(d) from about 30 to 50 percent by weight of propylene glycol monomethyl ether; and

(e) from about 30 to 50 percent by weight of monopropyl ether of ethylene glycol.

16. A primer composition for polycarbonate substrates, said composition consisting essentially of in admixture:

(a) from about 1 to 5 percent by weight of a thermoplastic acrylic polymer;

(b) from about 0.2 to 2.0 percent by weight of a UV light absorbing or stabilizing compound;

(c) from about 10 to 25 percent by weight of diacetone alcohol;

(d) from about 30 to 50 percent by weight of propylene glycol monomethyl ether; and

(e) from about 30 to 50 percent by weight of monopropyl ether of ethylene glycol.

17. A primer composition for polycarbonate substrates, said composition comprising in admixture:

(a) from about 1 to 5 percent by weight of a thermoplastic acrylic polymer;

(b) from about 0.2 to 2.0 percent by weight of a UV light absorbing or stabilizing compound;

(c) about 15 percent by weight of diacetone alcohol;

(d) about 40 percent by weight of propylene glycol monomethyl ether; and

(e) about 45 percent by weight of monopropyl ether of ethylene glycol.

18. A primer composition for polycarbonate substrates, said composition comprising in admixture:

(a) from about 1.5 to 3 percent by weight of a thermoplastic acrylic polymer;

(b) from about 0.4 to 1.5 percent by weight of a UV light absorbing or stabilizing compound:

(c) from about: 12 to 20 percent by weight of diacetone alcohol;

(d) from about 35 to 45 percent by weight of propylene glycol monomethyl ether; and

(e) from about 35 to 45 percent by weight of monopropyl ether of ethylene glycol.